# EUROPEAN PATENT APPLICATION

(11) **EP 3 050 789 A1**
(43) Date of publication of application: **03.08.2016**
(21) Application number: 14847960.3
(22) Date of filing: 24.09.2014
(51) Int. Cl.: B62M 1/10

(54) **BICYCLE DRIVE DEVICE**

(30) Priority: 27.09.2013 JP 2013201064
(71) Applicant: Gokiso Giken Co., Ltd, Ama-gun, Aichi 497-0030 (JP)
(72) Inventor: KONDO Yutaka, Ama-gun Aichi 497-0030 (JP)
(74) Representative: White, Duncan Rohan
(86) International application number: PCT/JP2014/075208
(87) International publication number: WO 2015/046210

(57) **Abstract**

Object: To hold the crank arm in a horizontal state.

Solution: The bicycle driving device includes a shaft 3

rotatably mounted on a part of a body frame, two crank arms 6 perpendicularly disposed at both ends of the shaft 3 so as to be symmetrical with each other at 180° with respect to a center of the shaft 3 as a base point, a gear 8 mounted at one end of the shaft 3, which is provided with a chain, a fly wheel 5 with a predetermined mass, which is disposed parallel to the gear 8, and a balance weight 2 mounted on a disk plate 22 as a predetermined plane parallel to the gear 8 on an extension of a longitudinal center line of any one of the crank arms 6. Selected figure: Fig. 1

## Description

### Technical Field

The present invention relates to a bicycle driving device configured to smoothly convert the unidirectional linear motion applied to pedals of a bicycle to a rotary motion of the drive system mainly constituted by the pedals and gear.

### Background Art

Generally, the concept focusing on the bicycle driving mechanism configured to convert linear motion into rotary motion has been substantially unavailable. The relevant technology is disclosed in JP-A-2013-86535.

### Citation List

### Patent Literature

PTL 1: JP-A-2013-86535

### Summary of Invention

### Technical Problem

The aforementioned art relates to the bicycle driving device mainly constituted by crank arms and pedals. Specifically, the device is configured to dispose a disk-shaped eccentric weight at a side of any one of the crank arms so that the position of the pedal attached to the tip of the crank arm upon start of rotating operations is placed slightly closer to the pedaling side than the top dead center of the pedal rotary motion. Employment of the aforementioned structure as the generally employed art allows the inertial force to efficiently work (operate) during pedaling operated by the rider. However, such art does not aim at conversion of the linear input motion into smooth rotary motion as intended by the present invention. On the contrary, the present invention intends to provide means for converting the linear motion applied to the pedals into smooth rotary motion. In the state where the rotary motion is started by pedaling at one side, the balance weight for generating the rotational kinetic energy equivalent to the one generated by the pedal is mounted on the axis of the crank arm to which the pedal is attached so that the balance weight faces the pedal for smooth rotary motion of the pedal. There may be the demand for changing properties of the crank arm, especially its length depending on the bicycle traveling condition. It is an object of the present invention to provide the bicycle driving device to satisfy the demand by appropriately adjusting the mount position or the mount condition of the aforementioned balance weight.

### Means for Solving the Problem

In order to solve the aforementioned problem, the present invention as described in claim 1 provides the bicycle driving device as a first aspect, which includes a shaft rotatably mounted on a part of a body frame, two crank arms perpendicularly disposed at both ends of the shaft so as to be symmetrical with each other at 180° with respect to a center of the shaft as a base point, a pedal attached to a tip of the crank arm, a gear mounted at one end of the shaft, which is provided with a chain, and balance weights disposed in a predetermined plane parallel to a surface formed by a rotary motion of the crank arm for generating kinetic energy equivalent to the kinetic energy generated by rotary motion of the crank arm and the pedal. Each mount position of those balance weights is set to be adjustable in an arc with a predetermined radius with respect to an axial center of the shaft.

The present invention as described in claim 2 provides the bicycle driving device as a second aspect, which includes a shaft rotatably mounted on a part of a body frame, two crank arms perpendicularly disposed at both ends of the shaft so as to be symmetrical with each other at 180° with respect to a center of the shaft as a base point, a pedal attached to a tip of the crank arm, a gear mounted at one end of the shaft, which is provided with a chain, and a balance weight mounted on one surface of the gear for generating kinetic energy equivalent to the kinetic energy generated by rotary motion of the crank arm and the pedal on an extension of a longitudinal center line of the crank arm at one side. A mount position of the balance weight is adjusted in an arc with a predetermined radius with respect to an axial center of the shaft.

The present invention as described in claim 3 provides the bicycle driving device as a third aspect, in which the balance weight is of two-piece type having pieces symmetrical with each other with respect to the longitudinal center of the crank arm at one side, and a mount position of each of the pieces on any one of surfaces of either the plane or the gear is adjustable in a circumferential direction.

The present invention as described in claim 4 provides the bicycle driving device as a fourth aspect, which includes a shaft rotatably mounted on a part of a body frame, two crank arms perpendicularly disposed at both ends of the shaft so as to be symmetrical with each other at 180° with respect to a center of the shaft as a base point, a pedal attached to a tip of the crank arm, a disk-like gear mounted at one end of the shaft, which is provided with a chain, and a balance weight mounted on one surface of a disk-like member parallel to the gear on an extension of a longitudinal center line of any one of the crank arms so as to be slidably movable in a radiation direction of the disk-like member.

The present invention as described in claim 5 provides the bicycle driving device as a fifth aspect, which includes a shaft rotatably mounted on a part of a body frame, two crank arms perpendicularly disposed at both ends of the shaft so as to be symmetrical with each other at 180° with respect to a center of the shaft as a base point, a pedal attached to a tip of the crank arm, a gear mounted at one end of the shaft, which is provided with a chain, a first balance weight mounted on a surface at one end of the shaft on an extension of a longitudinal center line of any one of the crank arms, a fly wheel with a disk-like shape, mounted at the other end of the shaft, and a second balance weight mounted on a surface of the fly wheel on an extension of a longitudinal center line of the other crank arm so as to have its mount position adjustable on a circumferential surface of the fly wheel in the circumferential direction.

The present invention as described in claim 6 according to any one of claims 1 to 5 as sixth aspect, in which the crank arm includes a first arm mounted at the crank shaft side, and a second arm mounted at the pedal side, and a length between a center of the crank shaft and a center of a pedal mount part, which are defined by the arms is made adjustable.

### Advantageous Effects of Invention

In the first aspect of the present invention according to claim 1, the rotational kinetic energy generated mainly by the crank arm and the pedal at one side is balanced. In other words, according to the present invention, the balance weight is disposed on the longitudinal axis of the crank arm at one side so as to allow the value of rotational kinetic energy generated by the balance weight and the value of the kinetic energy generated by the rotary motion of the crank arm and the pedal to be kept in an equivalent state. This makes it possible to retain smooth operation of the rotary motion upon pedaling operated by the rider.

Likewise the first aspect of the present invention, in the second aspect of the present invention according to claim 2, pedaling operated by the rider ensures efficient energy application to the gear, thus maintaining smooth rotary motion.

In the third aspect of the present invention according to claim 3, the mount position of the balance weight is finely adjustable as needed on the circumferential surface of the gear or the mount member. This makes it possible to realize smooth fine adjustment of the rotary motion system in response to the pedal or the crank arm changed in accordance with the running condition.

In the fourth aspect of the present invention according to claim 4, the balance weight may be extended in the radiation direction of the disk-like gear from the shaft. This makes it possible to absorb fluctuations of the rotational kinetic energy caused by mass fluctuation mainly of the pedal or the crank arm by finely adjusting the mount state of the balance weight. As a result, the pedal rotary motion may be smoothly maintained.

In the fifth aspect of the present invention according to claim 5, the balance weights are mounted at both ends of the shaft, respectively. Those two balance weights mounted at both ends of the shaft allow motions of the left and right crank arms in rotation to be smoothly promoted, thus maintaining the smooth rotary motion state of the left and right crank arms while preventing generation of irregular vibration in the bicycle body. Then the rider is capable of smoothly pedaling the left and right pedals, resulting in efficient traveling while reducing fatigue as least as possible.

In the sixth aspect of the present invention according to claim 6, the crank arm is of two-section type. Those two arm sections are connected using a connecting bolt. The entire length of the crank arm may be varied (changed) by loosening or fastening the connecting bolt in accordance with the circumstances at the time. According to the present invention, the length of the crank arm may be adjusted to the appropriate value within a certain range.

### Brief Description of Drawings

Fig. 1 is an expanded perspective view of a basic structure having balance weights mounted on the surface of a disk-like disk plate.
Fig. 2 is an expanded perspective view of a basic structure having balance plates mounted at the gear side.
Fig. 3 represents a general structure of the balance weight of two-piece type mounted on the disk plate.
Fig. 4 represents the balance weight of two-piece type in the state where the mount position of each pieces is finely adjusted.
Fig. 5 represents the state of the balance weight of two-piece type mounted on the surface of the gear.
Fig. 6 represents the state where each mount position of the two balance plates mounted at the gear side is finely adjusted.
Fig. 7 represents a basic structure which allows fine adjustment of the mount position of the balance weight in the radiation direction of the disk-like disk plate.
Fig. 8 is an expanded perspective view representing an overall structure having a fly wheel and a first balance weight mounted on the surface of the disk plate parallel to the fly wheel at one end of the shaft, and a gear and a second balance weight mounted at the other end of the shaft.
Fig. 9 represents a structure of an adjustable crank arm according to the present invention, configured to change (adjust) its length.

### Description of Embodiment

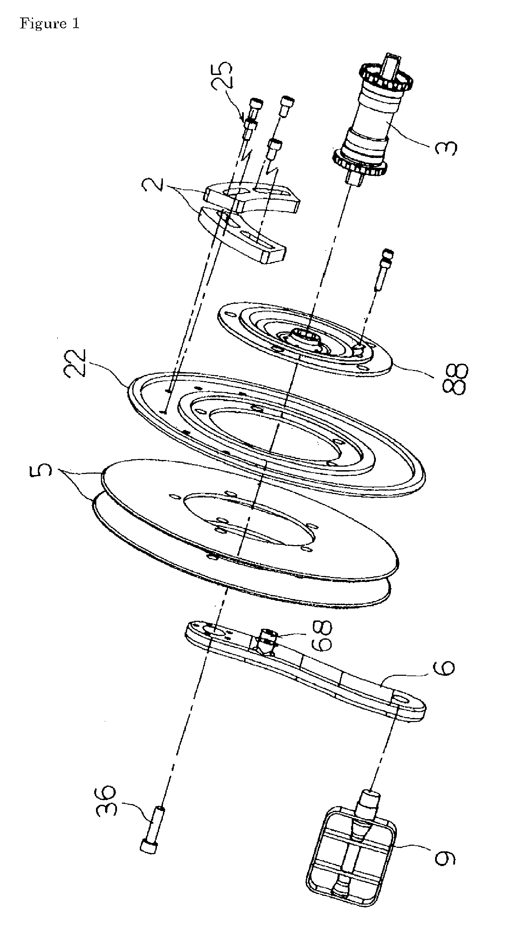

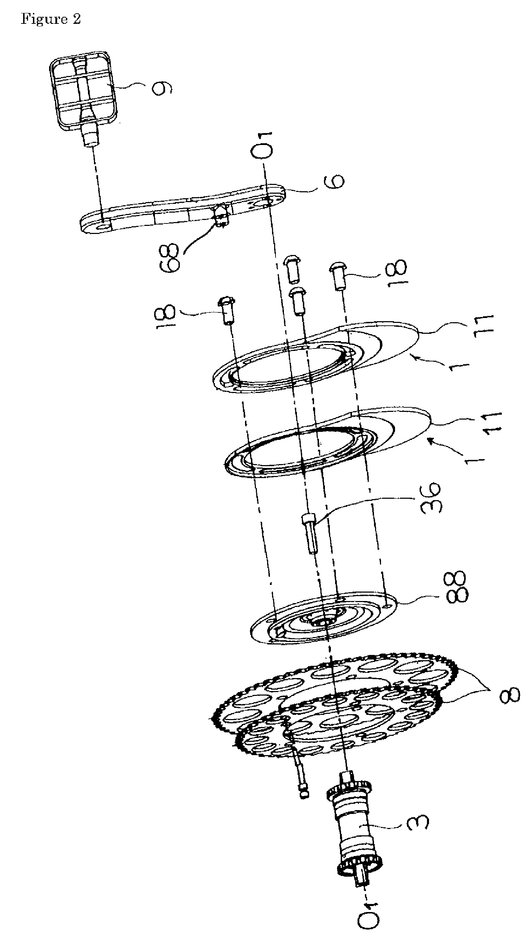

An embodiment of the present invention will be described referring to Figs. 1 to 9. The device according to the present invention is basically configured to allow both values of the centrifugal force M generated by the pedaling rotary motion as kinetic energy, and the total value (vector) F of centrifugal forces generated by rotary motions of the respective balance weights to be brought into an equivalent state. Specifically, as Fig. 1 or 2 illustrates, the device includes a shaft assembly (shaft) 3 rotatably mounted on a part of a body frame, for example, lower part, two crank arms 6, 6 perpendicularly disposed at both ends of the shaft so as to be symmetrical with each other at 180° with respect to a center O₁-O₁ of the shaft 3 as a base point (see Fig. 2), pedals 9, 9 attached to tips of the crank arms 6, 6, respectively, a gear 8 (see Fig. 2) mounted at one end of the shaft 3 so as to be provided with chain, a fly wheel 5 disposed parallel to the gear 8. The device further includes a balance weight 2 mounted on one surface of the disk plate 22 parallel to the fly wheel 5, or a balance plate 1 (see Fig. 2) with a predetermined mass, which is disposed on the surface parallel to the plane formed through the rotary motion of the crank arm 6.

The balance weight of the device with the aforementioned basic structure has two types. One is a two-piece type as shown in Fig. 1, in which the chip-like balance weights 2, 2 are mounted on the circumferential surface of the disk plate 22 parallel to the fly wheel 5 using a mount bolt 25. The disk plate 22 on which the chip-like balance weights 2, 2 are mounted is mounted at one end of the shaft 3 using a predetermined mount member 88 together with the fly wheel 5 through a center bolt 36 (see Fig. 2). The crank arm 6 is further mounted at the end of the shaft 3 on which the fly wheel 5 and the disk plate 22 are mounted, and the pedal 9 is attached to an end of the crank arm 6.

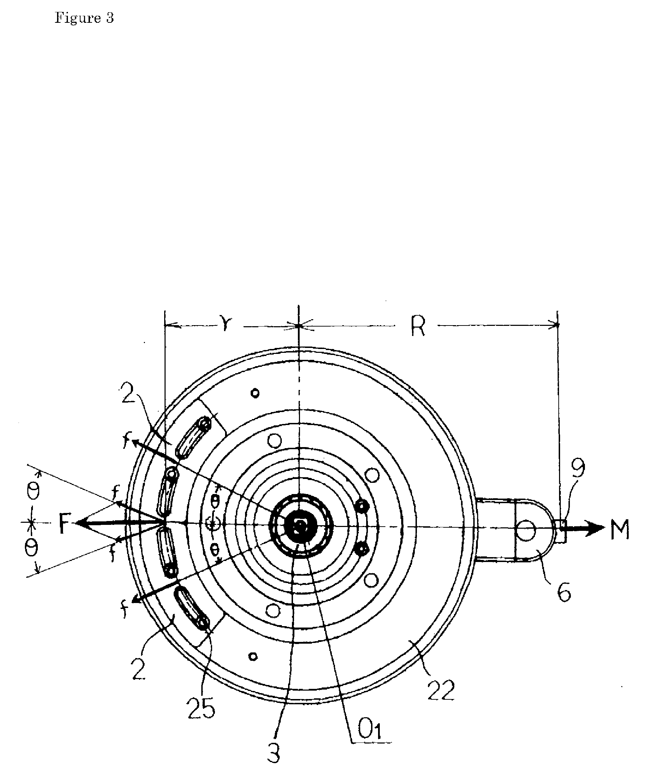

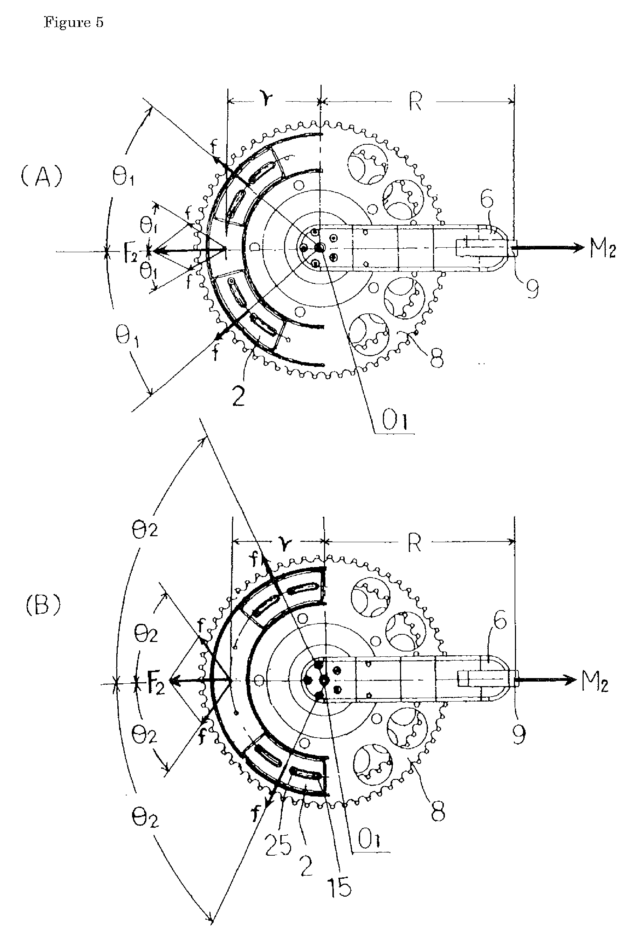

Specifically, the chip-like balance weights 2, 2 are mounted on the circumferential surface of the disk plate 22 coaxially using the mount bolt 25 as shown in Fig. 3. The chip-like balance weights 2, 2 may be directly mounted on one surface of the gear 8 as shown in Fig. 5. In the aforementioned cases, an arbitrary angle (θ) may be set to the appropriate value at which the chip-like balance weights 2, 2 are mounted as shown in Fig. 3. By setting the appropriate value of θ, the combined value (vector value) F of the centrifugal force generated by the balance weights 2, 2 may be balanced to be equivalent to the value of the centrifugal force M generated by the kinetic energy mainly caused by the rotary motion of the pedal 9.

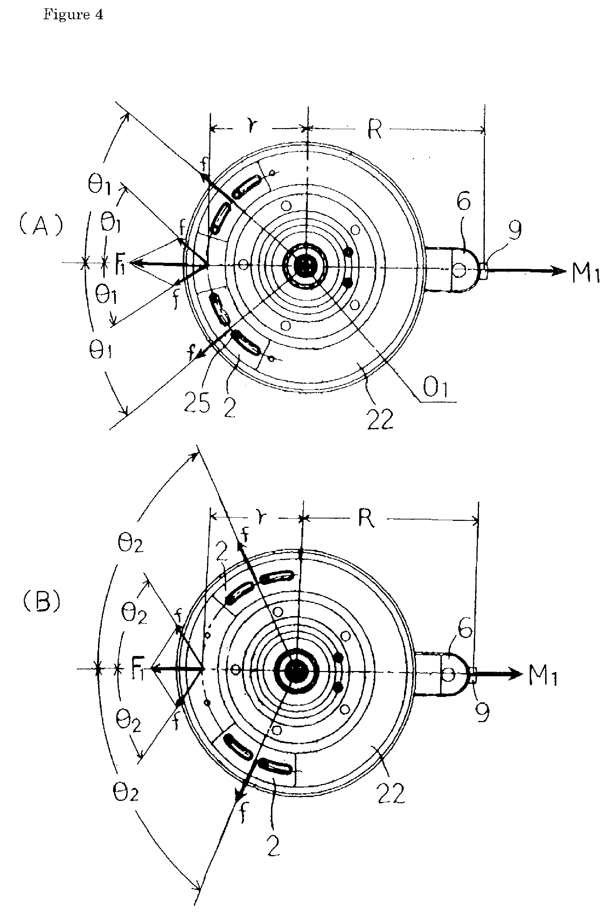

The structure having the chip-like balance weights 2, 2 mounted on the circumferential surface of the disk plate 22 parallel to the gear 8 will be described. Specifically, as Figs. 4A, 4B show, the structure serves to finely adjust each mount state of the balance weights 2, 2 which are mounted at the mount angles set to θ₁, θ₂, respectively. As the mount angle is set to the aforementioned appropriate value, such value of the angle θ may be set to θ₁ or θ₂ in response to fluctuation in the centrifugal force M₁ mainly caused by the pedal 9 resulting from the specification change for balancing values of the rotational kinetic energy, that is, centrifugal forces into equivalence to realize F₁=M₁. This promotes smooth rotary motions of the pedal 9 and the crank arm 6 at all times. As a result, the pedaling force may be efficiently converted into the rotary motions of the crank arms 6, resulting in smooth rotary motion of the gear 8.

The device may be configured to allow the respective chip-like balance weights 2, 2 constituting the balance weight to be directly mounted on any surface of the gear 8. Specifically, they are mounted on the gear 8 using the mount bolt 25 as shown in Fig. 5A or 5B. The aforementioned structure may omit the disk plate 22, thus reducing the mass and manufacturing cost of the driving device as a whole. In the embodiment, referring to Figs. 5A and 5B, each mount position of the chip-like balance weights 2 is finely adjusted by appropriately adjusting the value of θ for bringing the vector combined value F₂ of centrifugal forces f, f generated by the balance weights 2, 2 into equivalence to the value of the centrifugal force M₂ of the pedal 9. The mount positions of the balance weights 2, 2 in the aforementioned case are adjusted by loosening or fastening the mount bolt 25 appropriately.

Fig. 2 shows another example of the balance weight which is basically constituted by the balance plate 1. Specifically, referring to Fig. 2, the balance plate with a plate-like shape includes a mass part 11 which is mounted eccentrically with respect to the center line O₁-O₁ by a certain amount. In this embodiment, the number of the balance plates 1 is set to 2, but may be arbitrarily set with no limitation. For example, the number may be set to 1, or 3 or more so long as the appropriate amount of balance weight is allowed to be formed. The thus configured balance plate 1 is mounted at the other end of the shaft 3 together with the gear 8 and the like using the mount member 88 and a mount bolt 18. The crank arm 6 is further mounted at the end of the shaft 3 on which the gear 8 and the balance plates 1 have been mounted. The crank arm 6 is mounted so as to be symmetrical with the crank arm 6 shown in Fig. 1 at 180° in the plane perpendicular to the center line O₁-O₁ of the shaft 3. The pedal 9 is attached to the tip of the crank arm 6.

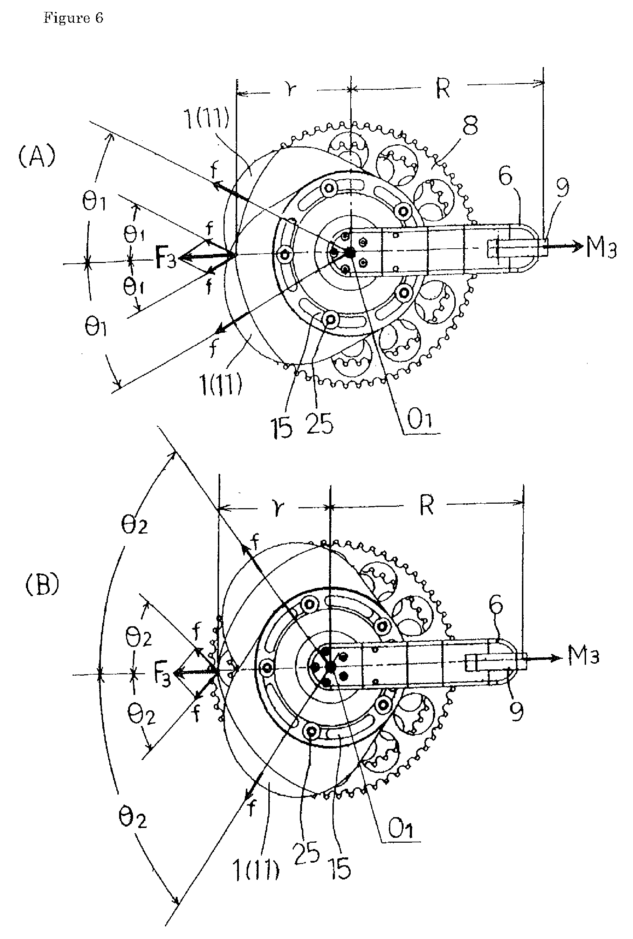

Basically, each of the aforementioned balance plates 1, 1 is configured to have the center of gravity on extension of the longitudinal center line of one of the crank arms 6 including the center point O₁ as shown in Fig. 6. In the case where two balance plates 1 are employed, positions of the respective mass parts 11, 11 are set (adjusted) to form opening angles therebetween (θ₁, θ₂) as shown in Figs. 6A and 6B. Specifically, fastening force of the mount bolt 25 for fixing the respective balance plates 1, 1, which is fitted in a notched groove 15 formed in those balance plates 1, 1 is released. In the aforementioned state, the balance plates 1, 1 are shifted so as to form the predetermined angles θ₁, θ₂ with respect to the axial center O₁ of the shaft 3 as the base point. Then the mount bolt 25 is fastened again. This may shift the mass parts 11, 11 by the amounts corresponding to the angle θ₁ or θ₂ from the rotary center O₁ as the base point. In the case where change in the pedal 9 and the like fluctuates the kinetic energy generated by the rotary motion of the pedal 9, that is, value of the centrifugal force M₃, the opposite centrifugal force F₃ equivalent to the value M₃ as the final vector combined value (F₃) may be changed by varying the value of θ to change the vector direction without changing the value (f) of the centrifugal force generated by each of the respective balance weights. This makes it possible to realize the balance in forces (centrifugal forces). The aforementioned balance between the centrifugal force (M) of the pedal 9 and the kinetic energy (centrifugal force : F) generated by the mass parts 11, 11 constituting the balance plates 1, 1 makes it possible to smoothly retain the rotary motions of the pedal 9 and the crank arm 6.

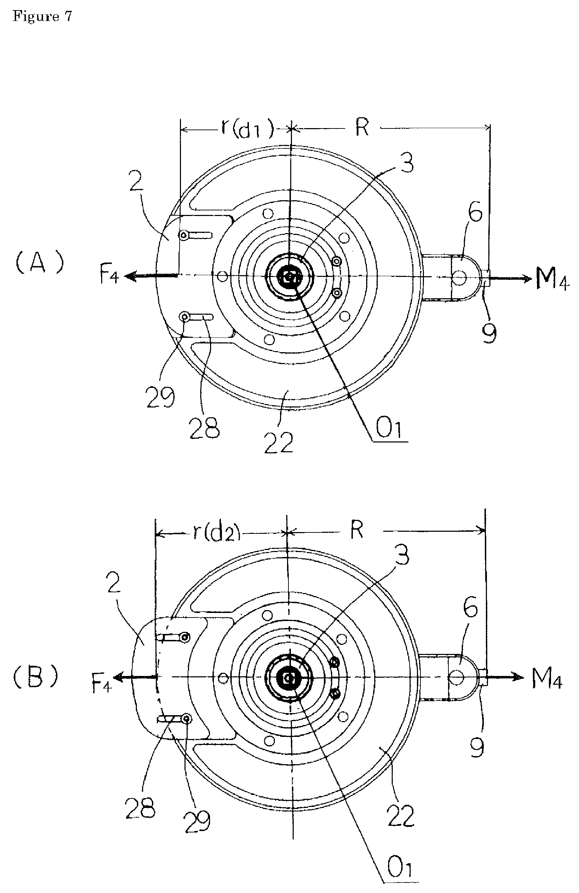

A modified example of the balance weight structure will be described referring to Fig. 7, in which the chip-like balance weight 2 is mounted on the circumferential surface of the disk plate 22 on the extension (including O₁) of the longitudinal center line of the crank arm 6. Specifically, as Figs. 7A and 7B show, the chip-like balance weight 2 is mounted through its slit 28 on the circumferential surface of the disk plate 22 using a lock bolt 29. The slit 28 formed as an elongated hole allows the chip-like balance weight 2 to change the mount position from the state shown in Fig. 7A to the state shown in Fig. 7B. The position of the chip-like balance weight 2 from the position at the rotary center O₁ of the disk plate 22 in the radial direction ensures to adjust the value of the centrifugal force F₄ as the rotational kinetic energy mainly generated by the disk plate 22 to be the same value as the centrifugal force M₄ as the kinetic energy generated by the rotary motion of the pedal 9. This makes it possible to retain the balance of the rotational kinetic energies in the overall driving device, thus maintaining the smooth rotary motion of the driving device as a whole.

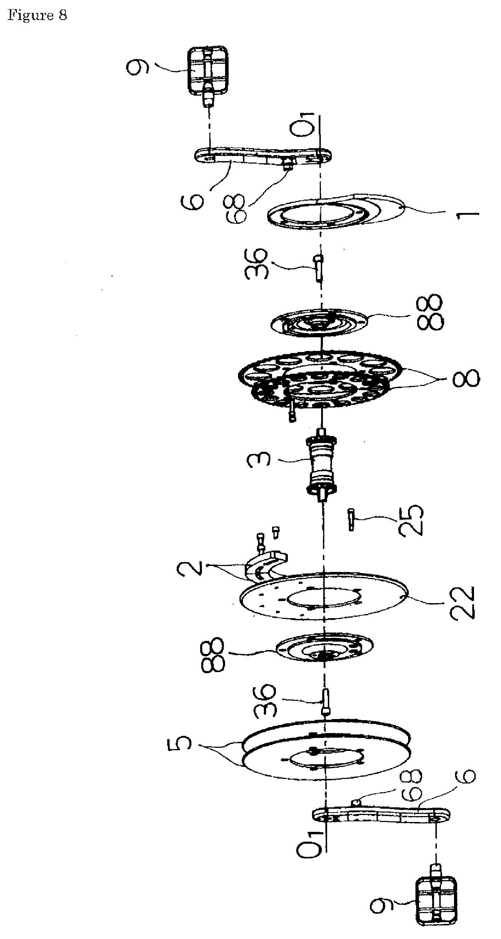

Fig. 8 shows a structure having the balance weight of combined type mounted. The structure uses the chip-like balance weight 2 mounted at one end of the shaft 3, and the balance weight as the balance plate 1 mounted at the other end of the shaft 3. The structure is configured to mount the disk plate 22 with the chip-like balance weight 2 on the circumferential surface at one end of the shaft 3 using the mount member 88 and the center bolt 36. Then the fly wheel 5 is attached to an outer side of the disk plate 22. The other crank arm 6 is mounted at the other end of the shaft 3, and the pedal 9 is attached to the end of the crank arm 6. The gear 8 is mounted at the other end of the shaft 3 using the mount member 88 and the center bolt 36. In the aforementioned state, the balance plate 1 is attached to the outer side of the gear 8 so that the other crank arm 6 is further mounted at the other end of the shaft 3. Furthermore, the pedal 9 is attached to the end of the crank arm 6. In this way, assembly of the overall structure of the driving device is completed.

In the embodiment, the chip-like balance weight 2 is mounted at one end of the shaft 3 via the disk plate 22, and the balance plate 1 as the balance weight of the other type is mounted at the other end of the shaft 3. This makes it possible to realize an equilibrium state between the left and right balance weights with respect to the longitudinal center line of the bicycle as a whole. As a result, the smooth rotary motion is ensured in operation of the driving device, that is, the fly wheel 5, the disk plate 22, the gear 8, and the balance plate 1 in rotary motion with respect to the shaft 3 as the center. The rider is allowed to maintain smooth motions around his/her legs, resulting in comfortable bicycle traveling.

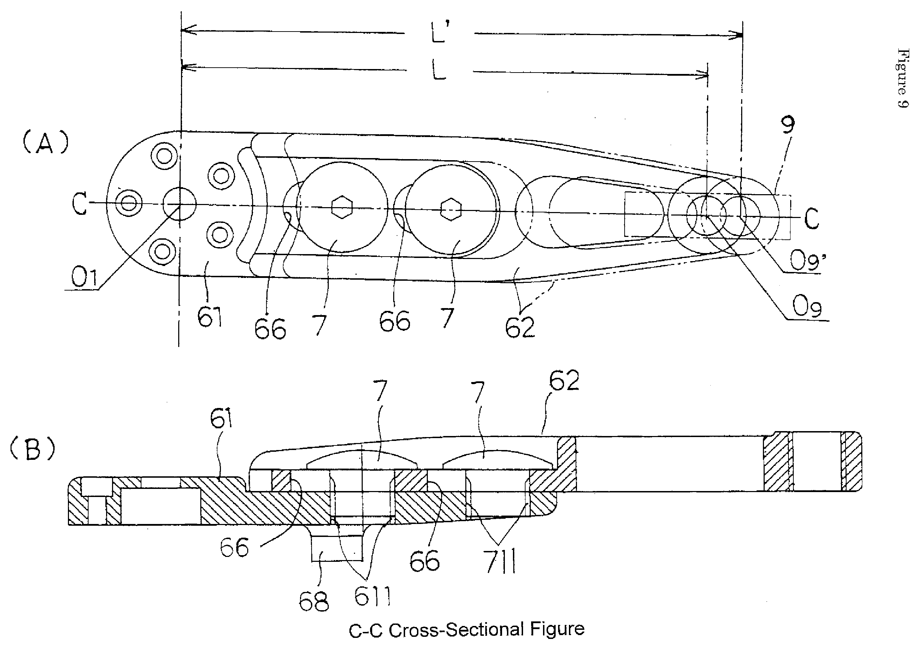

In the embodiment, the crank arm may be of two-section type as shown in Fig. 9 so that the entire length of the crank arm is changed from L to L' . Referring to Fig. 9A, the structure includes a first arm 61 rotatably mounted with respect to the axial center O₁ of the crank shaft as a fulcrum, and a second arm 62 having its tip attached to the pedal 9 rotatably with respect to a mount point O₉. The aforementioned structure has elongated holes 66, 66 around a portion at which the second arm 62 is linked to the first arm 61 as shown in Figs. 9A and 9B. Those holes extending along axes of the arms 61, 62 receive insertion of corresponding shafts of the connecting bolts 7. An anchor 68 serving to transfer the rotary torque from the crank arm to the gear 8 is mounted on the first arm 61 at the position around the axial center O₁ of the crank shaft. Female threads 611, 611 are formed around the tip of the first arm 61, which are engaged respectively with male threads 711, 711 of the connecting bolts 7 inserted into the elongated holes 66, 66 formed in the second arm 62 as shown in Fig. 9B.

The special connecting bolts 7, 7 each with an umbrella-like flange portion are secured in the elongated holes 66, 66. The male thread 711 of the connecting bolt 7 is screwed into the female thread 611 of the first arm 61 so as to allow the first arm 61 and the second arm 62 to be linearly linked to constitute the crank arm with a predetermined length (L). The pedal 9 is attached to the tip (O₉) of the second arm 62 for constituting the crank arm. In this way, assembly of the bicycle driving device is completed. In the aforementioned structure, fastening condition of the connecting bolt 7 is loosened to relatively shift the first arm 61 and the second arm 62 to change the distance therebetween in the elongated hole 66 formed in the second arm 62. Then the connecting bolt 7 is fastened again to change the distance value of L defined by the first arm 61 and the second arm 62 to an appropriate value of L', for example. In this way, the aforementioned structure allows setting (adjustment) of the distance (L) from the center of the crank shaft (O₁) to the attachment point (O₉) of the pedal 9 in accordance with circumstances at the time.

### List of Reference Signs

1: balance plate
11: mass part
15: notched groove
18: mount bolt
2: balance weight
22: disk plate
25: mount bolt
28: slit
29: lock bolt
3: shaft
36: center bolt
5: fly wheel
6: crank arm
611: female thread
61: first arm
62: second arm
66: elongated hole
68: anchor
7: connecting bolt
711: male thread
8: gear
88: mount member
9: pedal

## Claims

1. A bicycle driving device comprising:
a shaft rotatably mounted on a part of a body frame;
two crank arms perpendicularly disposed at both ends of the shaft so as to be symmetrical with each other at 180° with respect to a center of the shaft as a base point;
a pedal attached to a tip of the crank arm;
a gear mounted at one end of the shaft, which is provided with a chain; and
balance weights disposed in a predetermined plane parallel to a surface formed by a rotary motion of the crank arm for generating kinetic energy equivalent to the kinetic energy generated by rotary motion of the crank arm and the pedal, wherein each mount position of those balance weights is set to be adjustable in an arc with a predetermined radius with respect to an axial center of the shaft.

2. A bicycle driving device comprising:
a shaft rotatably mounted on a part of a body frame;
two crank arms perpendicularly disposed at both ends of the shaft so as to be symmetrical with each other at 180° with respect to a center of the shaft as a base point;
a pedal attached to a tip of the crank arm;
a gear mounted at one end of the shaft, which is provided with a chain; and
a balance weight mounted on one surface of the gear for generating kinetic energy equivalent to the kinetic energy generated by rotary motion of the crank arm and the pedal on an extension of a longitudinal center line of the crank arm at one side, wherein a mount position of the balance weight is adjusted in an arc with a predetermined radius with respect to an axial center of the shaft.

3. The bicycle driving device according to claim 1 or 2, wherein:
the balance weight is of two-piece type having pieces symmetrical with each other with respect to the longitudinal center of the crank arm at one side; and
a mount position of each of the pieces on any one of surfaces of either the plane or the gear is adjustable in a circumferential direction.

4. A bicycle driving device comprising:
a shaft rotatably mounted on a part of a body frame;
two crank arms perpendicularly disposed at both ends of the shaft so as to be symmetrical with each other at 180° with respect to a center of the shaft as a base point;
a pedal attached to a tip of the crank arm;
a disk-like gear mounted at one end of the shaft, which is provided with a chain; and
a balance weight mounted on one surface of a disk-like member parallel to the gear on an extension of a longitudinal center line of any one of the crank arms so as to be slidably movable in a radiation direction of the disk-like member.

5. A bicycle driving device comprising:
a shaft rotatably mounted on a part of a body frame;
two crank arms perpendicularly disposed at both ends of the shaft so as to be symmetrical with each other at 180° with respect to a center of the shaft as a base point;
a pedal attached to a tip of the crank arm;
a gear mounted at one end of the shaft, which is provided with a chain;
a first balance weight mounted on a surface at one end of the shaft on an extension of a longitudinal center line of any one of the crank arms;
a fly wheel with a disk-like shape, mounted at the other end of the shaft; and
a second balance weight mounted on a surface of the fly wheel on an extension of a longitudinal center line of the other crank arm so as to have its mount position adjustable on a circumferential surface of the fly wheel in the circumferential direction.

6. The bicycle driving device according to any one of claims 1 to 5, wherein:
the crank arm includes a first arm mounted at the crank shaft side, and a second arm mounted at the pedal side; and
a length between a center of the crank shaft and a center of a pedal mount part, which are defined by the arms is made adjustable.
